# EUROPEAN PATENT SPECIFICATION

(11) **EP 3 845 768 B1**
(45) Date of publication and mention of the grant of the patent: **27.09.2023**
(21) Application number: 19854114.6
(22) Date of filing: 09.08.2019
(51) Int. Cl.: F16B 39/284, A61C 8/00, F16B 39/28, F16B 39/34

(54) **SCREW FASTENING STRUCTURE WITH LOCKING FUNCTION**
SCHRAUBENBEFESTIGUNGSSTRUKTUR MIT VERRIEGELUNGSFUNKTION
STRUCTURE DE FIXATION PAR VIS AVEC FONCTION DE VERROUILLAGE

(30) Priority: 31.08.2018 JP 2018162388
(43) Date of publication of application: 07.07.2021
(73) Proprietor: HARDLOCK INDUSTRY CO., Ltd., Osaka 577-063 (JP)
(72) Inventor: WAKABAYASHI, Katsuhiko, Higashiosaka-shi, Osaka 577-0063 (JP)
(74) Representative: JENSEN & SON
(86) International application number: PCT/JP2019/031567
(87) International publication number: WO 2020/045046

(56) References cited:
- EP-A1- 3 243 480
- WO-A1-2016/111312
- JP-A- H1 037 936
- JP-A- H09 236 109
- JP-A- 2012 110 922

## Description

### TECHNICAL FIELD

The present invention relates to a screw-fastening assembly having anti-loosening capabilities.

### BACKGROUND ART

The applicant of the present application has developed various screw-fastening assemblies having anti-loosening capabilities. For example, Patent Document 1 discloses a screw-fastening assembly that allows the bolt to helically advance while maintaining prevailing torque at a predetermined level, thereby allowing the bolt to be tightened up to a predetermined axial position while keeping anti-loosening capabilities.

That is, the screw-fastening assembly disclosed in Patent Document 1 provides an engagement shaft with the shape of a straight circular column on the distal end of the screw shank of the bolt, while the base member, having a screw hole that allows the screw shank to be screwed therein, has an engagement hole located interior in the screw hole that allows the engagement shaft to be introduced therein. Either the engagement shaft is eccentric from the screw shank (in which case the engagement hole is concentric with the screw hole) or the engagement hole is eccentric from the screw hole (in which case the engagement shaft is concentric with the screw shank), such that the outer peripheral surface of the engagement shaft and the inner peripheral surface of the engagement hole come into pressure contact along part of their circumference such that pressing forces in directions perpendicular to the axis act on the screw shank, and these lateral pressing forces generate prevailing torque.

### PRIOR ART DOCUMENTS

### PATENT DOCUMENTS

Patent Document 1: JP 2016-123778 A

### SUMMARY OF THE INVENTION

### PROBLEMS TO BE SOLVED BY THE INVENTION

The screw-fastening assembly disclosed in Patent Document 1 is constructed such that the fit clearance between the screw shank and screw hole, the eccentricity of the engagement shaft from the engagement hole, and/or other parameters may be adjusted in such a manner that allows the bolt to helically advance while maintaining prevailing torque at a constant level.

However, such adjustment work is not necessarily easy. That is, during actual designing, the designer alters the above-mentioned parameters, such as fit clearance and/or eccentricity, numerous times in small amounts, while looking for reasonable tolerances that will result in the appropriate prevailing torque. Since the screw shank is slightly inclined due to the eccentric fit between the engagement shaft and engagement hole, and the position on the straight columnar screw shank that experiences the maximum pressure contact with the engagement hole changes as the bolt advances helically, the freedom in designing the sizes of various portions to allow the bolt to helically advance while maintaining prevailing torque at a constant level is extremely low. And, if such a design is achieved, another issue is the high possibility of small manufacturing errors that make it impossible to allow the bolt to helically advance up to the final tightening position.

In view of this, an object of the present invention is to provide a novel screw-fastening assembly with first and second screw elements that can be designed relatively easily and, at the same time, allows the second screw element to helically advance relative to the first screw element while maintaining prevailing torque at a constant level.

### MEANS FOR SOLVING THE PROBLEMS

A screw-fastening assembly according to the present invention and as claimed in claim 1 includes a first screw element and a second screw element adapted to be screw-fastened to the first screw element. One of the first and second screw elements includes an engagement recess with an inner peripheral surface, the engagement recess being open toward the other screw element. The other screw element includes an engagement protrusion, the engagement protrusion being introduced into the engagement recess in a fastened state. The inner peripheral surface of the engagement recess is formed in a cylindrical shape that is straight along an axial direction. The engagement protrusion is shaped as a circular column or cylinder having a maximum-diameter portion at one location along the axial direction.

The engagement protrusion and the engagement recess are eccentric relative to each other such that the maximum-diameter portion of the engagement protrusion and the inner peripheral surface of the engagement recess are in pressure contact only along part of their circumference in the fastened state.

The maximum-diameter portion of the engagement protrusion is spaced apart from a base end of the engagement protrusion by a predetermined distance so as to allow the engagement protrusion to move forward and backward along the axial direction relative to the engagement recess with the maximum-diameter portion remaining in pressure contact with the inner peripheral surface of the engagement recess only along part of their circumference.

In the screw-fastening assembly of the present invention, as the second screw element is tightened to the first screw element, the maximum-diameter portion of the engagement protrusion engages the edge of the engagement recess halfway through the tightening process, which generates pressing forces in directions perpendicular to the axial direction against the second screw element, producing a predetermined amount of prevailing torque that depends on the recess-protrusion eccentricity. When the second screw element is further tightened, the engagement protrusion helically advances in the axial direction relative to the engagement recess; still, the axial position on the engagement protrusion that is in pressure contact with the inner peripheral surface of the engagement recess remains the same, that is, the above-mentioned maximum-diameter portion is constantly in pressure contact with the inner peripheral surface of the engagement recess, resulting in a stable amount of inclination and/or eccentricity of the second screw element relative to the first screw element, which allows the second screw element to be tightened up to the position of completion of tightening while maintaining prevailing torque at the initial level.

In the screw-fastening assembly of the present invention described above, the maximum-diameter portion of the engagement protrusion is located close to a distal end of the engagement protrusion. The outer peripheral surface of the engagement protrusion is a reverse-tapered surface having a diameter gradually increasing toward the distal end.

In one aspect of the present invention, the first screw element may be a bolt member. This bolt member may include a screw shank and the engagement protrusion, the engagement protrusion protruding from a distal end of the screw shank in the axial direction away from the distal end. Preferably, the screw shank and engagement protrusion are integrally formed; alternatively, the bolt member may be constructed by separately forming a screw-shank component and an engagement-protrusion component and then joining them together.

The second screw element may be a nut member. The nut member may include a screw hole adapted to allow the screw shank to be threadably mounted therein, and the engagement recess, the engagement recess located interior in the screw hole. The engagement recess may be constituted by a through-hole, or by a hole that does not extend through the nut.

Further, the nut member may include a nut body having the screw hole opened at both ends, and an adjustment member threadably mounted into the screw hole through the one opening thereof so as to be movable forward and backward in the axial direction. The adjustment member may include a positioning surface and the engagement recess. The positioning surface may be adapted to abut the distal end of the screw shank of the bolt member threadably mounted into the screw hole through the other opening thereof. The engagement recess may be open in the positioning surface. This arrangement allows one to fine-tune the position of completion of tightening of the bolt by adjusting the axial position of the adjustment member relative to the nut body. That is, it is possible to adjust the axial position of the positioning surface of the adjustment member by causing the adjustment member to helically advance relative to the nut body, thereby precisely adjusting the axial position of the bolt member relative to the nut member upon completion of fastening. Further, threading on the nut member occurs only at two locations, i.e., in the screw hole and on the outer periphery of the adjustment member for the male thread, which means low manufacturing costs. In addition, as the bolt member is tightened into the nut member, the engagement protrusion is inserted into the engagement recess, and some circumferential sections of the inner peripheral surface of the engagement recess and the outer peripheral surface of the engagement protrusion come into pressure contact such that radial pressing forces act on the screw shank, thus generating a predetermined amount of tightening torque. This tightening torque achieves loosening prevention of the bolt. Moreover, since the axial position on the engagement protrusion that is in pressure contact with the inner peripheral surface of the engagement recess remains the same, the screw shank can helically advance until its distal end abuts the positioning surface with a substantially constant tightening torque being kept to be generated, enabling precise adjustment of the position of completion of tightening while providing anti-loosening capabilities. Further, in implementations where the engagement recess is constituted by a through-hole, the engagement recess can be used as an inspection opening that allows one to look through the nut member's one opening to inspect the bolt to see whether it has been tightened up until the distal end of the screw shank abutted the positioning surface.

In some implementations, the axis of the inner peripheral surface of the engagement recess may be eccentric from the axis of the male thread formed on the outer periphery of the adjustment member, and the axis of the outer peripheral surface of the engagement protrusion may be concentric with the axis of the male thread formed on the outer periphery of the screw shank. In other implementations, the axis of the inner peripheral surface of the engagement recess may be concentric with the axis of the male thread formed on the other periphery of the adjustment member, and the axis of the outer peripheral surface of the engagement protrusion may be eccentric from the axis of the male thread formed on the outer periphery of the screw shank.

In another aspect of the invention, the first screw element may be a bolt member, the bolt member including a screw shank and the engagement protrusion, the engagement protrusion protruding from a distal end of the screw shank in the axial direction away from the distal end, and the second screw element may be a base member including a screw hole adapted to allow the screw shank to be threadably mounted therein, and the engagement recess, the engagement recess located interior in the screw hole.

In yet another aspect of the invention, the first screw element may include a screw shank and a first nut mounted threadably on the screw shank, the engagement protrusion may be provided on the first nut's one end as determined along the axial direction to protrude therefrom, the second screw element may be constituted by a second nut, and the second nut may include a screw hole adapted to allow the screw shank to be threadably mounted therein and the engagement recess.

In still another aspect of the invention, the first screw element may include a screw shank and a first nut mounted threadably on the screw shank, the engagement recess may be provided on the first nut's one end as determined along the axial direction, the second screw element may be constituted by a second nut, and the second nut may include a screw hole adapted to allow the screw shank to be threadably mounted therein and the engagement protrusion.

### EFFECTS OF THE INVENTION

The screw-fastening assembly of the present invention can be designed relatively easily and, at the same time, allows the second screw element to helically advance relative to the first screw element while maintaining prevailing torque at a constant level, and is capable of achieving loosening prevention by means of such prevailing torque both when the elements are at the position of completion of tightening and at a position with some loosening from the position of completion of tightening.

### BRIEF DESCRIPTION OF THE DRAWINGS

[FIG. 1] FIG. 1 is a cross-sectional view of a screw-fastening assembly according to a first embodiment of the present invention, as found halfway through the tightening work.
[FIG. 2] FIG. 2 is a cross-sectional view of the screw-fastening assembly as found upon completion of tightening.
[FIG. 3] FIG. 3 is a perspective view of a nut member constituting the second screw element of the screw-fastening assembly.
[FIG. 4] FIG. 4 is a graph illustrating tightening torque in the screw-fastening assembly during the tightening process.
[FIG. 5] FIG. 5 is a cross-sectional view of a screw-fastening assembly according to a second embodiment of the present invention.

### EMBODIMENTS FOR CARRYING OUT THE INVENTION

Embodiments of the present invention will now be described with reference to the drawings.

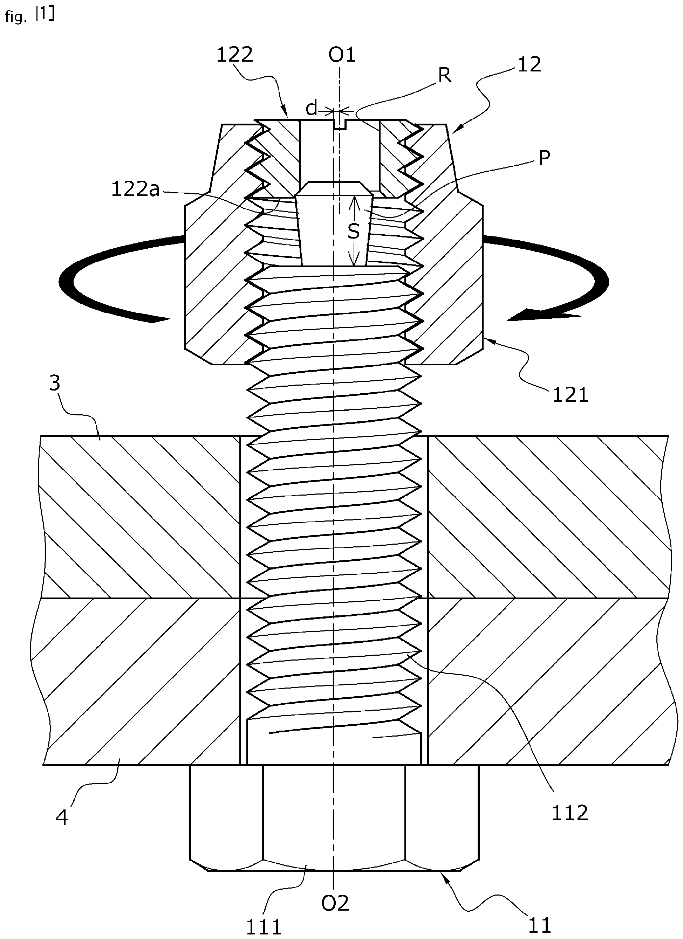

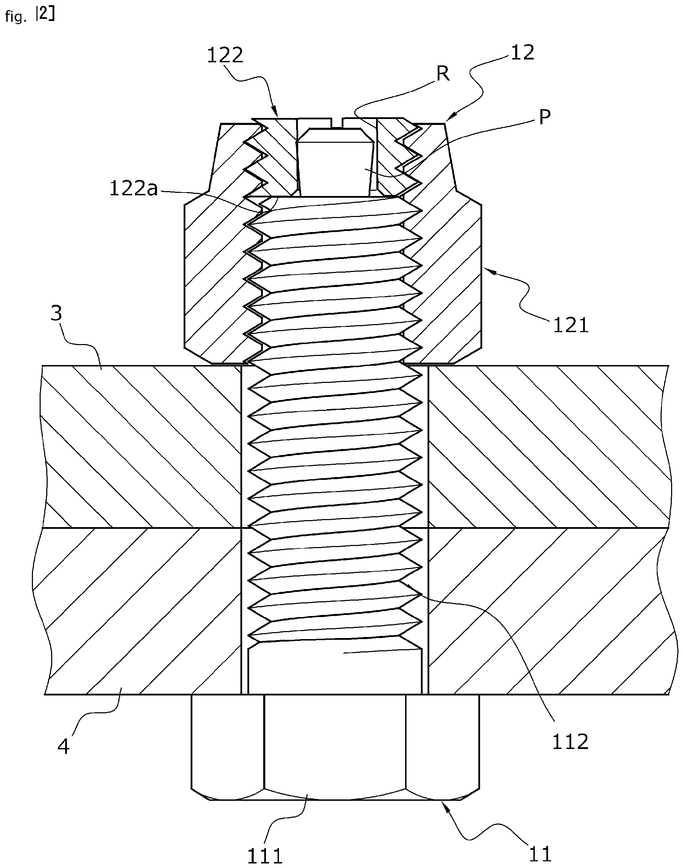

FIGS. 1 and 2 show a screw-fastening assembly according to a first embodiment of the present invention. The screw-fastening assembly of the present embodiment includes a bolt member 11 working as the first screw element and a nut member 12 working as the second screw element.

The bolt member 11 includes a bolt head 111 and a screw shank 112 that is formed integrally with the bolt head 111.

The nut member 12 is threadably mounted on the screw shank 112 of the bolt member 11. Two or more members to be fastened 3 and 4 are sandwiched between the bolt head 111 of the bolt member 11 and the nut member 12 so as to be fastened by the bolt and nut members 11 and 12. The screw-fastening assembly according to the present embodiment is suitable for applications where large compression forces acting on the members to be fastened 3 and 4 are not desirable, e.g., where the members to be fastened 3 and 4 have small compressive strengths. Further, the screw-fastening assembly according to the present embodiment can be suitably used as a pivoting structure for attaching one or more rotational members to the screw shank 112.

The bolt member 11 includes the screw shank 112 which has a male thread formed on its outer periphery, the bolt head 111 which has the shape of a hexagonal prism and is formed integrally with the base end of the screw shank 112, and an engagement protrusion P protruding from the distal end of the screw shank 112 in the axial direction away from the distal end. The engagement protrusion P of the present embodiment is shaped like a circular column and has an outer peripheral surface forming a reverse taper with a diameter gradually increasing toward its own distal end. As such, the engagement protrusion P has its maximum-diameter portion close to its distal end as measured in the axial direction, where the maximum-diameter portion is spaced apart from the distal end of the screw shank 111 by a distance S.

The diameter of the engagement protrusion P is smaller than the root diameter of the male thread of the screw shank 112 such that a stepped portion is formed between the screw shank 112 and engagement protrusion P. Further, in the embodiment shown, the axis of the engagement protrusion P is concentric with the axis of the male thread on the outer periphery of the screw shank 111.

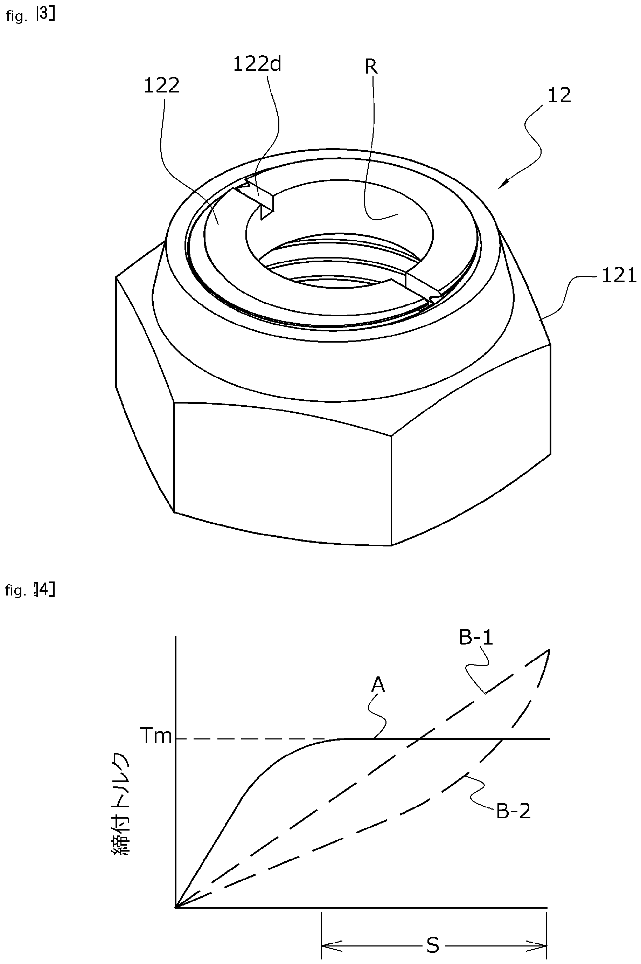

As also shown in FIG. 3, the nut member 12 includes a nut body 121 having a screw hole extending therethrough in the axial direction, and a cylindrical adjustment member 122 that can be moved into the screw hole of the nut body 121 through the hole's one opening and threadably mounted into the hole. The nut body 121 may be a common hexagonal nut, or may be a nut with any other structure. The adjustment member 122 has an axial dimension that is smaller than the height of the nut body 121 (i.e., its axial length). That end surface of the adjustment member 122 which is closer to the nut member's other end as determined along the axial direction (i.e., the lower end surface in the embodiment shown) works as a positioning surface 122a that is to be abutted by the distal end of the screw shank 111 of the bolt member 11 as threadably mounted into the screw hole of the nut body 121. This positioning surface 122a has an opening, i.e., engagement recess R, that allows the engagement protrusion P to be introduced therein. The diameter of the engagement recess R is larger than the diameter of the engagement protrusion P. The inner peripheral surface of the engagement recess R is represented by that of a straight cylinder. The outer periphery of the adjustment member 122 is provided with a male thread. Further, the axis of the engagement recess R, O₁, is slightly eccentric, by a predetermined amount d, from the axis O₂ of the male thread formed on the outer periphery of the adjustment member 122.

In the embodiment shown, the engagement recess R extends through the adjustment member 122 in the axial direction; alternatively, the recess may not extend through the member. That end surface of the adjustment member 122 which is closer to the nut member's one end as determined along the axial direction (i.e., the upper end in the implementation shown) has a tool engagement groove 122d to be engaged by a rotation tool.

The amount of eccentricity d of the engagement recess R is such that, when the engagement protrusion P of the bolt member 11 as threadably mounted in the screw hole of the nut member 12 is inserted into the engagement recess R of the adjustment member 122 as threadably mounted in the screw hole, some circumferential sections of the inner peripheral surface of the engagement recess R and the close-to-distal maximum-diameter portion of the engagement protrusion P are in pressure contact.

In the screw-fastening assembly according to the present embodiment, the adjustment member 122 may be moved forward and backward in the axial direction relative to the nut body 121 to fine-tune the axial position of the positioning surface 122a of the adjustment member 122 relative to the nut body 121. Thus, the adjustment member 122 may be moved forward and backward to fine-tune the positional relationship between the nut 1 and bolt 2 in the axial direction as found when the bolt member 11 has been tightened up until the distal end of the screw shank 112 of the bolt member 11 abuts the positioning surface 122a.

Further, the eccentric fit between the engagement protrusion P of the bolt member 11 and the engagement recess R of the adjustment member 122 results in large forces perpendicular to the axial direction acting on the screw shank 112 of the bolt member 11, thereby achieving loosening prevention by virtue of the so-called wedge effect.

Particularly, in the construction of the present embodiment, the engagement protrusion P of a reverse-taper construction is fitted, with eccentricity, into the engagement recess R having an inner peripheral surface represented by that of a straight cylinder; thus, the prevailing torque generated in the bolt 11, Tm, is generally constant, as shown in FIG. 4, from an early stage of an eccentric fit shown in FIG. 1 up until the state of completion of tightening shown in FIG. 2.

FIG. 4 is a graph with a horizontal axis representing the amount of helical advancement of the bolt relative to the origin, which corresponds to the moment at which the distal end of the engagement protrusion P abuts the edge of the opening of the engagement recess R, and a vertical axis representing the prevailing torque generated between the bolt and nut (i.e., tightening torque). Line A indicates a torque transition curve for the screw-fastening assembly of the present embodiment, while lines B-1 and B-2 indicate torque transition curves for engagement protrusions shaped as straight columns.

In the screw-fastening assembly of the present embodiment, the distal end of the engagement protrusion P and the opening edge of the engagement recess R are chamfered; thus, up until the maximum-diameter portion of the engagement protrusion P engages the straight-cylinder inner peripheral surface of the engagement recess R, tightening torque gradually increases as the bolt 11 helically advances relative to the nut 12, as indicated by line A. Then, after the maximum -diameter portion of the engagement protrusion P is fitted, with eccentricity, to the cylinder inner peripheral surface of the engagement recess R, the bolt 11 can helically advance relative to the nut 12 while the tightening torque Tm is maintained at a constant level.

If the engagement protrusion P is shaped as a straight circular column, it may be possible to allow the bolt to helically advance with a constant tightening torque if the pitches of the threads on the screw shank of the bolt and the screw hole of the nut body and the fit clearance therebetween are appropriately fine-tuned, as disclosed in Patent Document 1 mentioned above; however, if components with a screw shank and a screw hole that conform to standard specifications are used, tightening torque in most cases either increases straight up as the bolt helically advances, as indicated by line B-1, or rapidly increases immediately before the completion of tightening, as indicated by line B-2, regardless of how one adjusts the amount of eccentricity d. If tightening torque thus excessively increases, it is practically impossible to further tighten the bolt relative to the nut.

The screw-fastening assembly of the present embodiment allows the bolt 11 to helically advance until the distal end of the screw shank 112 abuts the positioning surface 122a while achieving loosening prevention by means of an eccentric fit. Further, the screw-fastening assembly of the present embodiment has only a small number of parts and a small number of locations to be threaded, which will minimize manufacturing costs and make it possible to produce high-performance adjustment nuts for low costs.

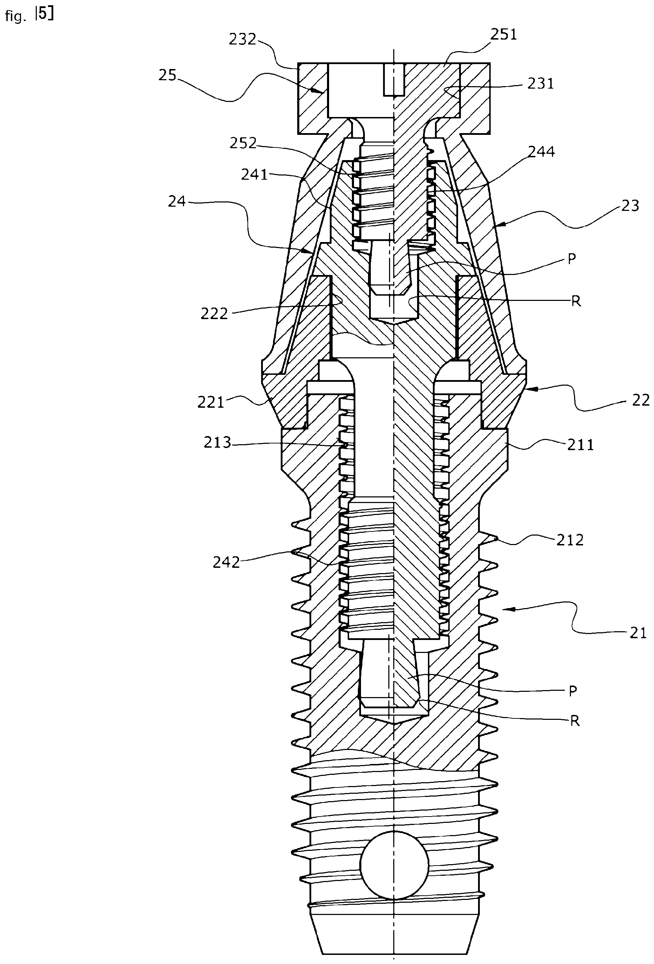

FIG. 5 shows a dental implant including a screw-fastening assembly according to a second embodiment of the present invention. This dental implant includes a fixture 21 to be embedded in the alveolar bone, an abutment 23 attached to the upper end of the fixture 21 with an attachment 22 provided therebetween, an attachment screw 24 for fixing the attachment 22 to the fixture 21, and an abutment screw 25 for mounting the abutment 23 on the attachment screw 24; these components may be made from a titanium alloy, for example.

In the implementation shown, the fixture 21 is a parallel implant (i.e., straight implant), with its upper end portion forming a platform 211 working as a bolt head and provided with a male thread 212 with a constant diameter extending from the lowermost section of the platform 211 toward the distal end of the fixture 21 (i.e., its lower end in the implementation shown). Further, the fixture 21 includes a screw hole 213 that extends in the axial direction and is open in the upper surface of the platform 211, and the bottom of the screw hole 213 includes an engagement recess R having an inner periphery represented by that of a straight cylinder with a diameter smaller than the inner diameter (i.e., female-thread diameter) of the screw hole 213. This engagement recess R is concentric with the screw hole 213.

The attachment 22 is generally shaped as a hollow truncated cone with a lower end portion constituting a fitting portion 221 shaped as a hollow reverse-truncated cone that fits on the platform 211 of the fixture 1. The lower surface of the fitting portion 221 abuts the upward-facing surface of the stepped portion of the platform 211 of the fixture 21 from above, and is in liquid-tight surface contact therewith along the entire circumference. A fitting hole 222 extends in the vertical direction through those portions of the attachment 22 which are located higher than the fitting portion 221, where the fitting hole has an inner peripheral surface represented by that of a cylinder and allows the fitting shank of the attachment screw 24 to be fitted therein.

The attachment screw 24 is a bolt member for fixing the attachment 22, which constitutes a member to be fastened, to the fixture 21, which constitutes a base member, and includes a head 241, a screw shank 242 extending downward from the head 241 to be screwed in the screw hole 213 of the fixture 21, and an engagement protrusion P that extends downward from the lower end surface of the screw shank 242 and is to be inserted into the engagement recess R of the fixture 21 to engage its inner peripheral surface, these three components being integral to each other.

The engagement protrusion P forms a reverse taper having an outer peripheral surface with a diameter that gradually increases toward its distal end, with a maximum-diameter portion located close to the distal end. The engagement protrusion P is slightly eccentric from the screw shank 242 such that, when the engagement protrusion P engages the engagement recess R of the fixture 21, the screw shank 242 is slightly eccentric and/or inclined relative to the screw hole 213. Thus, when the maximum-diameter portion of the engagement protrusion P is engaged with the engagement recess R, it is possible to cause the screw 24 to helically advance while keeping prevailing torque at a generally constant level, thus allowing the screw 24 to be tightened up to a predetermined position of completion of tightening.

In this way, the fixture 21 works as a first screw element, whereas the attachment screw 24 works as a second screw element.

The head 241 of the attachment screw 24 abuts and engages the upper end surface of the attachment 22 in a liquid-tight manner, and has a tapered outer peripheral surface that is flush with the outer peripheral surface of the attachment 22.

Further, the head 241 of the attachment screw 24 includes a screw hole 244 that extends in the axial direction and is open in the upper surface of the head, where the bottom of the screw hole 244 is provided with an engagement recess R having a straight-cylinder inner surface with a diameter smaller than the inner diameter (i.e., female-thread diameter) of the screw hole 244. This engagement recess R is concentric with the screw hole 244.

The abutment 23 is a tapered hollow member that is adapted to cover the attachment 22 and attachment screw 24 from above, with a lower end surface adapted to abut and engage the upper surface of the fitting member 221 of the attachment 22 along the entire circumference in a liquid-tight manner. The upper end portion of the abutment 23 includes a crown attachment portion 232 having an inner periphery forming a fitting hole 231 that allows the head 251 of the abutment screw 251 to fit therein. The outer peripheral surface of the crown attachment portion 232 is chamfered so as to have a generally square shape.

The abutment screw 25 is a bolt member for fixing the abutment 23, which constitutes a member to be fastened, to the attachment screw 24, which constitutes a base member, and includes a columnar head 251 with an upper surface having a tool engagement groove to be engaged by a tool such as a flathead screwdriver, a screw shank 252 contiguous to and located below the lower surface of the head 251, and an engagement protrusion P contiguous to and located below the lower end surface of the screw shank 252.

The outer peripheral surface of the engagement protrusion P of the abutment screw 25 forms a reverse taper with a diameter that gradually increases toward the distal end of the engagement protrusion, with a maximum -diameter portion located close to the distal end. Further, the engagement protrusion P is slightly eccentric from the screw shank 252. With this construction, when the engagement protrusion P engages the engagement recess R of the attachment screw 24, the screw shank 252 is slightly eccentric and/or inclined relative to the screw hole 244. Thus, when the maximum -diameter portion of the engagement protrusion P is engaged with the engagement recess R, it is possible to allow the abutment screw 25 to helically advance while keeping prevailing torque generally at a constant level, thus allowing the abutment screw 25 to be tightened up to a predetermined position of completion of tightening.

In this way, the attachment screw 24 works as a first screw element, whereas the abutment screw 25 works as a second screw element.

Alternatively, in the second embodiment, the engagement protrusions P of the screws 24 and 25 may be concentric with the screw shanks 242 and 252, respectively, whereas the engagement recesses R may be eccentric from the respective screw holes 213 and 244.

The present invention is not limited to the above-described embodiments, and its design can be modified as necessary.

### EXPLANATION OF CHARACTERS

P: engagement protrusion
R: engagement recess
11: bolt member (first screw element)
112: screw shank
12: nut member (second screw element)
121: nut body
122: adjustment member
112a: positioning surface
21: base member (first screw element)
24: attachment screw (second screw element)

## Claims

1. A screw-fastening assembly having anti-loosening capabilities, comprising a first screw element (11) and a second screw element (12) adapted to be screw-fastened to the first screw element (11);
wherein one of the first and second screw elements (11,12) includes an engagement recess R with an inner peripheral surface, the engagement recess being open toward the other screw element, the other screw element includes an engagement protrusion P, the engagement protrusion being introduced into the engagement recess R in a fastened state,
the inner peripheral surface of the engagement recess R is formed in a cylindrical shape that is straight along an axial direction,
the engagement protrusion P is shaped as a circular column or cylinder having a maximum-diameter portion at one location along the axial direction,
the engagement protrusion P and the engagement recess R are eccentric relative to each other such that the maximum-diameter portion of the engagement protrusion P and the inner peripheral surface of the engagement recess R are in pressure contact only along part of their circumference in the fastened state,
**characterized in that**
the maximum -diameter portion of the engagement protrusion P is spaced apart from a base end of the engagement protrusion P by a predetermined distance so as to allow the engagement protrusion P to move forward and backward along the axial direction relative to the engagement recess R with the maximum-diameter portion remaining in pressure contact with the inner peripheral surface of the engagement recess only along part of their circumference,
the maximum -diameter portion of the engagement protrusion is located close to a distal end of the engagement protrusion P, and
the outer peripheral surface of the engagement protrusion P is a reverse-tapered surface having a diameter gradually increasing toward the distal end.

2. The screw-fastening assembly having anti-loosening capabilities according to claim 1, wherein the first screw element (11) is a bolt member, the bolt member including a screw shank (112) and the engagement protrusion P, the engagement protrusion (P) protruding from a distal end of the screw shank (112) in the axial direction away from the distal end, and
the second screw element (12) is a nut member, the nut member includes a screw hole adapted to allow the screw shank (112) to be threadedly mounted therein, and the engagement recess (R), the engagement recess being located interior in the screw hole.

3. The screw-fastening assembly having anti-loosening capabilities according to claim 2, wherein
the nut member includes a nut body (121) having the screw hole opened at both ends, and an adjustment member (122) mounted threadedly into the screw hole through the one opening thereof so as to be movable forward and backward in the axial direction; and
the adjustment member (122) includes a positioning surface and the engagement recess, the positioning surface adapted to abut the distal end of the screw shank (112) of the bolt member threadedly mounted into the screw hole through the other opening thereof, and the engagement recess being open in the positioning surface.

4. The screw-fastening assembly having anti-loosening capabilities according to claim 1, wherein the second screw element (12) is a bolt member, the bolt member including a screw shank (112) and the engagement protrusion, the engagement protrusion protruding from a distal end of the screw shank in the axial direction away from the distal end, and
the first screw element (11) is a base member including a screw hole adapted to allow the screw shank (112) to be threadedly mounted therein and the engagement recess, the engagement recess being located interior in the screw hole.

## Patentansprüche

1. Eine Schraubbefestigungsstruktur mit Verriegelungsfunktion, umfassend ein erstes Schraubelement (11) und ein zweites Schraubelement (12), das darauf ausgelegt ist, mit dem ersten Schraubelement (11) verschraubt zu werden;
wobei entweder das erste oder das zweite Schraubelement (11, 12) eine Eingriffsaussparung R mit einer inneren Umfangsfläche umfasst, die Eingriffsaussparung zum anderen Schraubelement hin offen ist, das andere Schraubelement einen Eingriffsvorsprung P umfasst, und der Eingriffsvorsprung im befestigten Zustand in die Eingriffsaussparung R eingeführt ist,
die innere Umfangsfläche der Eingriffsaussparung R eine zylindrische, in axialer Richtung gerade verlaufende Form hat,
der Eingriffsvorsprung P die Form einer kreisrunden Säule oder eines Zylinders hat, deren Maximaldurchmesserteil an einem Punkt entlang der axialen Richtung liegt,
der Eingriffsvorsprung P und die Eingriffsaussparung R exzentrisch zueinander liegen, so dass der Maximaldurchmesserteil des Eingriffsvorsprungs P und die innere Umfangsfläche der Eingriffsaussparung R im befestigten Zustand nur entlang eines Teils ihres Umfangs in Druckkontakt stehen
**dadurch gekennzeichnet, dass**
der Maximaldurchmesserteil des Eingriffsvorsprungs P zu einem Basisende des Eingriffsvorsprungs P um eine bestimmte Distanz beabstandet ist, so dass sich der Eingriffsvorsprung P entlang der axialen Richtung relativ zur Eingriffsaussparung R vor- und zurückbewegen kann, während der Maximaldurchmesserteil nur entlang eines Teil des Umfangs mit der inneren Umfangsfläche der Eingriffsaussparung in Druckkontakt bleibt,
sich der Maximaldurchmesserteil des Eingriffsvorsprungs in der Nähe eines distalen Endes des Eingriffsvorsprungs P befindet und
die äußere Umfangsfläche des Eingriffsvorsprungs P eine hinterschnittene Oberfläche ist, deren Durchmesser zum distalen Ende hin allmählich zunimmt.

2. Die Schraubbefestigungsstruktur mit Verriegelungsfunktion nach Anspruch 1, wobei das erste Schraubelement (11) ein Bolzenelement ist, das Bolzenelement einen Schraubschaft (112) und den Eingriffsvorsprung P umfasst, der Eingriffsvorsprung (P) vom distalen Ende des Schraubschafts (112) weg in axialer Richtung über diesen hinausragt, und
das zweite Schraubelement (12) ein Mutternelement ist, wobei das Mutternelement ein Schraubloch umfasst, das so ausgelegt ist, dass der Schraubschaft (112) darin eingeschraubt werden kann, sowie die Eingriffsaussparung (R), wobei sich die Eingriffsaussparung in dem Schraubloch befindet.

3. Die Schraubbefestigungsstruktur mit Verriegelungsfunktion nach Anspruch 2, wobei das Mutternelement einen Mutternkörper (121) mit einem an beiden Ende offenen Schraubloch umfasst sowie ein Einstellelement (122), das durch eine seiner beiden Öffnungen in das Schraubloch eingeschraubt wird, so dass es in axialer Richtung vor- und zurück bewegt werden kann; und
das Einstellelement (122) eine Positionierungsfläche und die Eingriffsaussparung umfasst, wobei die Positionierungsfläche so ausgelegt ist, dass sie am distalen Ende des Schraubschafts (112) des Bolzenelements anliegt, wenn dieses in die andere Öffnung des Schraublochs eingeschraubt ist, und die Eingriffsaussparung in der Positionierungsfläche offen ist.

4. Die Schraubbefestigungsstruktur mit Verriegelungsfunktion nach Anspruch 1, wobei das zweite Schraubelement (12) ein Bolzenelement ist, das Bolzenelement einen Schraubschaft (112) und den Eingriffsvorsprung umfasst, der Eingriffsvorsprung vom distalen Ende des Schraubschafts weg in axialer Richtung über diesen hinausragt, und
das erste Schraubelement (11) ein Basiselement ist, das ein Schraubloch umfasst, das so ausgelegt ist, dass der Schraubschaft (112) darin eingeschraubt werden kann, sowie die Eingriffsaussparung, wobei sich die Eingriffsaussparung in dem Schraubloch befindet.

## Revendications

1. Ensemble de fixation par vis ayant des capacités autobloquantes, comprenant un premier élément vis (11) et un second élément vis (12) conçu pour être rapidement vissé au premier élément vis (11) ;
dans lequel un parmi les premier et second éléments vis (11, 12) comprend un évidement de mise en prise R ayant une surface périphérique interne, l'évidement de mise en prise étant ouvert en direction de l'autre élément vis, l'autre élément vis comprend une saillie de mise en prise P, la saillie de mise en prise étant introduite dans l'évidement de mise en prise R lorsque l'ensemble est monté,
la surface périphérique interne de l'évidement de mise en prise R est réalisée sous la forme d'un cylindre qui est droit le long d'une direction axiale,
la saillie de mise en prise P est façonnée sous la forme d'une colonne circulaire ou d'un cylindre ayant une portion de diamètre maximum à un emplacement le long de la direction axiale,
la saillie de mise en prise P et l'évidement de mise en prise R sont excentriques l'un par rapport à l'autre de sorte que la portion de diamètre maximum de la saillie de mise en prise P et la surface périphérique interne de l'évidement de mise en prise R sont en contact par pression uniquement le long d'une partie de leur circonférence lorsque l'ensemble est monté,
**caractérisé en ce que**
la portion de diamètre maximum de la saillie de mise en prise P est à distance d'une extrémité de base de la saillie de mise en prise P d'une distance prédéterminée de manière à permettre à la saillie de mise en prise P de se déplacer vers l'avant et vers l'arrière le long de la direction axiale par rapport à l'évidement de mise en prise R ayant la portion de diamètre maximum restant en contact par pression avec la surface périphérique interne de l'évidement de mise en prise uniquement le long d'une partie de leur circonférence,
la portion de diamètre maximum de la saillie de mise en prise est située à proximité d'une extrémité distale de la saillie de mise en prise P et
la surface périphérique externe de la saillie de mise en prise P est une surface en forme de cône inversé ayant un diamètre augmentant progressivement en direction de l'extrémité distale.

2. Ensemble de fixation par vis ayant des capacités autobloquantes selon la revendication 1, dans lequel le premier élément vis (11) est un élément boulon, l'élément boulon comprenant une tige de vis (112) et la saillie de mise en prise P, la saillie de mise en prise (P) faisant saillie d'une extrémité distale de la tige de vis (112) dans la direction axiale à l'opposé de l'extrémité distale, et
le second élément vis (12) est un élément écrou, l'élément écrou comprend un orifice de passage de vis conçu pour permettre à la tige de vis (112) d'être montée par vissage à l'intérieur de celui-ci, et l'évidement de mise en prise (R), l'évidement de mise en prise étant situé à l'intérieur de l'orifice de passage de vis.

3. Ensemble de fixation par vis ayant des capacités autobloquantes selon la revendication 2, dans lequel
l'élément écrou comprend un corps d'écrou (121) ayant l'orifice de passage de vis ouvert à chacune de ses deux extrémités, et un élément de réglage (122) monté par vissage dans l'orifice de passage de vis à travers l'ouverture de celui-ci de manière à pouvoir se déplacer vers l'avant et l'arrière dans la direction axiale ; et
l'élément de réglage (122) comprend une surface de positionnement et l'évidement de mise en prise, la surface de positionnement conçue pour venir en butée contre l'extrémité distale de la tige de vis (112) de l'élément boulon monté par vissage dans l'orifice de passage de vis à travers l' autre ouverture de celui-ci, et l'évidement de mise en prise étant ouvert dans la surface de positionnement.

4. Ensemble de fixation par vis ayant des capacités autobloquantes selon la revendication 1, dans lequel le second élément vis (12) est un élément boulon, l'élément boulon comprenant une tige de vis (112) et la saillie de mise en prise, la saillie de mise en prise faisant saillie d'une extrémité distale de la tige de vis dans la direction axiale à l'opposé de l'extrémité distale, et
le premier élément vis (11) est un élément de base comprenant un orifice de passage de vis conçu pour permettre à la tige de vis (112) de pouvoir être montée par vissage en son sein et l'évidement de mise en prise étant situé à l'intérieur dans l'orifice de passage de vis.
